# EUROPÄISCHE PATENTSCHRIFT

(11) **EP 2 261 560 B1**
(45) Veröffentlichungstag und Bekanntmachung des Hinweises auf die Patenterteilung: **23.03.2016**
(21) Anmeldenummer: 08872565.0
(22) Anmeldetag: 06.10.2008
(51) Int. Cl.: F23G 5/027, F23G 5/20, C10B 19/00

(54) **VERFAHREN UND VORRICHTUNG ZUR VERARBEITUNG VON ORGANISCHEN HAUS- UND INDUSTRIEABFÄLLEN**
METHOD AND DEVICE FOR PROCESSING DOMESTIC AND INDUSTRIAL ORGANIC WASTE
PROCÉDÉ DE TRANSFORMATION DE DÉCHETS ORGANIQUES D'ORIGINE MÉNAGÈRE OU INDUSTRIELLE

(30) Priorität: 22.02.2008 RU 2008107014
(43) Veröffentlichungstag der Anmeldung: 15.12.2010
(73) Patentinhaber: Aktsionernoe Obschestvo "Finansovo- Promyshlennaya Gruppa "Tezaurum", 634009 Tomsk (RU)
(72) Erfinder: GAGA, Sergey Gennadievich, Tomsk 634059 (RU)
(74) Vertreter: Jeck, Anton
(86) Internationale Anmeldenummer: PCT/RU2008/000636
(87) Internationale Veröffentlichungsnummer: WO 2009/104981

(56) Entgegenhaltungen:
- EP-A2- 1 280 382
- WO-A1-02/33320
- GB-A- 2 420 542
- RU-C1- 2 100 402
- RU-C2- 2 202 589
- RU-C2- 2 229 060
- US-A- 4 647 443
- US-A- 5 902 915
- S. SOUFER ET AL.: 'Mir' BIOMASSA KAK ISTOCHNIK ENERGII. 1985, MOSCOW, page 104, 169
- BALAIKA B. ET AL.: 'Mashgiz' PROTSESSY TEPLOOBMENA V APPARATAKH KHIMICHESKOY PROMYSHLENNOSTI. 1962, MOSCOW, page 187

## Beschreibung

Die Erfindung betrifft ein Verfahren zur Verwertung von organischen Haushalts- und Industrieabfällen nach dem Oberbegriff des Anspruchs 1 und eine Einrichtung zur Durchführung des Verfahrens nach dem Oberbegriff des Anspruchs 8.

Ein gattungsgemäßes Verfahren und eine gattungsgemäße Einrichtung sind aus US 5 902 915 A bekannt.

Die Erfindung kann in der Abfallverwertung und bei der Gewinnung von Kohlenwasserstoffen aus organischen Haushalts- und Industrieabfällen mittels Pyrolyse eingesetzt werden. Sie kann auch zur Entsorgung und Verwertung von organischen Haushalts-, Landwirtschafts- und Industrieabfällen eingesetzt werden, so dass infolge der Verwertung dieser Abfälle Biogas, flüssige Mineralölprodukte sowie feste Brennstoffelemente erzeugt werden.

Den modernen Lösungen zur Entsorgung und Verwertung von Haushalts- und Industrieabfällen, insbesondere solchen wie Mist, Fleischereiabfälle, Holzspäne, Torf, Gummi, Haushaltsabfälle (nach der Metallentfernung) usw. liegen meistens solche Verfahren wie Pressen und Endlagerung, biologischer Abbau durch Mikroorganismen und Hochtemperaturverwertung zugrunde.

Mit der beachtlichen Zunahme der Abfallmengen wird das Prinzip des Hochtemperaturabbaus immer mehr bevorzugt, weil die Endlagerung und die Enzymzersetzung der Abfälle sehr platzbedürftig sind und als unwirtschaftlich gelten.

Aus dem Patent RU 2105245 (IPC F 23, G 5/00, veröffentlicht am 20.02.98) ist ein Verfahren zur Verwertung von festen Haushalts- und Industrieabfällen bekannt, welches ihre Aufbereitung und Beschickung in einen Vertikalschachtofen einschließt. Der Brennstoff und die Heißluft werden in den unteren Teil des Schachtofens zugeleitet. Danach werden das Pyrolysegas und die beim Brennen im oberen Teil entstehenden Dampfkomponenten abgeleitet.

Der wesentliche Nachteil des bekannten Verfahrens ist ein nicht besonders hoher Nutzeffekt des Vorgangs der Pyrolysegasgewinnung und -nutzung. Das ist dadurch bedingt, dass als Vergasungsmittel Heißluft verwendet wird. Dies führt zu einer Leistungsminderung des Arbeitsvorgangs bei der Verwertung der Abfälle.

Aus dem Patent RU 2213908 (IPC F 23, G 5/00, veröffentlicht am 10.10.03) ist ein Verfahren zur Verwertung von festen Haushalts- und Industrieabfällen bekannt. Es umfasst eine Vorbehandlung und eine Beschickung der Abfälle in einen Reaktor, eine Erhitzung, eine Trocknung, eine Pyrolyse und eine Verbrennung unter Bildung von gasförmigen und von flüssigen Verwertungsprodukten und eine Ableitung der Verwertungsprodukte aus dem Reaktor. Dabei erfolgen die Erhitzung, die Trocknung und die Pyrolyse im Reaktor unter einem Absolutdruck von 0,08 - 0,095 MPa. Die Vorbehandlung umfasst eine Zerkleinerung, eine Vermengung mit einem Fließmittel und ein Pressen.

Das genannte Verfahren hat eine ziemlich hohe Leistung und ist gleichzeitig umweltfreundlich, weil die Verwertung einige Vorbereitungsmaßnahmen für die Behandlung der Abfälle und die Sicherstellung der Bedingungen zur Intensivierung des Vorgangs einschließt. Jedoch ist der Abfallabbauvorgang sicherheits- und verfahrenstechnisch nicht effizient genug.

Eine bekannte Anlage zur Verwertung von organischem Rohstoff und seine Umwandlung in Brennstoffelemente (Patent RU 2182684, IPC F 23, G 5/027. veröffentlicht am 20.05.02) weist eine Beschickungsvorrichtung, einen Pyrolysereaktor mit Kreisbrennkammer, ein Trennsystem für eine Dampf-Gasmischung und eine Entladevorrichtung auf. Die Kreisbrennkammer wird unmittelbar in den Pyrolysereaktor eingebaut. Das bedingt eine Effizienzsteigerung. Jedoch ermöglicht es der Abfallabbauvorgang in der genannten Anlage nicht, eine qualitätsmäßig befriedigende Verwertung der Abfälle zu erreichen, weil der Reaktor baumäßig nicht für eine Pyrolyse unter Hochtemperaturen ausgelegt ist.

Stand der Technik gegenüber der angemeldeten Gruppe von Erfindungen sind ihrem technischen Wesen und dem erreichten technischen Ergebnis nach ein Verfahren und eine Einrichtung zur Gewinnung von Kohlenwasserstoffen aus Haushaltsmüll oder -abfällen bzw. aus Abfällen von organischen Materialien (Patent RU 2202589, IPC F 23, G 5/027, veröffentlicht am 10.10.03). Die Gewinnung erfolgt mittels Zweistufen-Crackens bei verschiedenen Temperaturen mit aufeinander folgender Beschickung und Entladung.

Das genannte Verfahren schließt eine Beschickung der Abfälle in einen waagerechten drehbaren Reaktor ein, um die Reaktion des ersten Crackens durchzuführen, und schließt außerdem die Beschickung der Reste des ersten Crackens in den Reaktor mit einem Schraubenflügelrührer ein, um die Reaktion des zweiten Crackens durchzuführen. Dabei stellt das Cracken die Pyrolysereaktion bzw. das katalytische Cracken dar.

Die Einrichtung zur Ausführung dieses Verfahrens enthält hauptsächlich einen waagerechten Drehreaktor und einen Reaktor mit Schraubenflügelrührer.

Das genannte Verfahren und die Einrichtung zur Verwertung der Abfälle sind sicherheits- und verfahrenstechnisch effizienter, da die Krackreaktionen in zwei Schritten in getrennten Reaktoren bei verschiedenen Temperaturen erfolgen. Fehlende Hochtemperaturen bei der ersten Krackreaktion wirken sich positiv auf den Zustand des Reaktors aus.

Jedoch sind dieses Verfahren zur Gewinnung der Kohlenwasserstoffe aus Haushaltsmüll oder -abfällen und die Einrichtung für seine Ausführung vom Standpunkt der Effizienz des Abfallzersetzungsvorgangs und insbesondere solcher Komponenten wie Geschwindigkeit und Qualität sowie Fertigungsgerechtheit und Sicherheit des Verwertungsvorgangs wirksamer. Der zusätzliche Faktor, welcher die Qualität der Abfallverwertung beeinflusst, ist das Vorhandensein eines Drehreaktors. Der Drehreaktor ist teuer und fertigungskompliziert Der wirksame Abbau unter Einwirkung von Hochtemperaturen hängt von der Einhaltung sicherheitstechnischer Bedingungen ab, welche durch das Fehlen von Reaktorverformungen bei hohen Temperaturen festgelegt sind.

Die genannten Probleme können mit Hilfe der Erfindung gelöst werden.

Es ist Hauptaufgabe der Erfindung, ein Verfahren und eine Einrichtung zur Verwertung von Haushalts- und Industrieabfällen organischer Materialien zu entwickeln. Die Erfindung ermöglicht es. die Qualität des Vorgangs der Abfallverwertung zu erhöhen den Abfall möglichst vollständig zu verarbeiten und nutzvolle Produkte zu gewinnen, z. B. flüssige und gasförmige Kohlenwasserstoffe und feste Produkte.

Die gestellte Aufgabe wird durch die Merkmale des Anspruchs 1 und des Anspruchs 8 gelöst.

Das technische Ergebnis ist eine Effizienz- und Zuverlässigkeitssteigerung dank einer Abfallverwertung in zwei Stufen, wobei verschiedene Einwirkungen - Pyrolyse und eine elektromagnetische Einwirkung - auf die Rohstoffe kombiniert werden. Dadurch wird der Abbau der Abfälle beschleunigt und so vollständig wie möglich durchgeführt. Auch können verschiedene nutzvolle Endprodukte möglichst optimal getrennt und strukturiert werden.

Das bekannte Verfahren zur Verwertung von organischen Haushalts- und Industrieabfällen umfasst eine erste und eine zweite Stufe der Pyrolyse, eine Trennung der Pyrolyseprodukte in die Fraktionen und die Verwertung jeder Fraktion, so dass nutzvolle Produkte gewonnen werden. Die zweite Stufe der Pyrolyse erfolgt unter gleichzeitiger elektromagnetischer Einwirkung auf die Pyrolyseprodukte.

Die periodische elektromagnetische Einwirkung erfolgt durch eine elektrische Entladung mit einer Einsatzspannung von 10 bis 50 kV mit einer Entladungsfrequenz von 3 bis 500 Hz.

Die beiden Pyrolysestufen werden bevorzugt im unbeweglichen Reaktor durchgeführt. Der Reaktor ist in zwei Teile geteilt, wo eine primäre Pyrolyse bei einer Temperatur von 200 - 300°C und eine sekundäre Pyrolyse bei einer Temperatur von 400 - 1200° C erfolgt.

Die Trennung der Pyrolyseprodukte in Fraktionen erfolgt dadurch, dass das Medium der flüssigen Kohlenwasserstoffe vom Wasser getrennt wird, die gasförmigen Produkte werden abgeleitet, gekühlt und kondensiert, und die festen Produkte werden aus dem Reaktor abgeleitet.

Die Haushalts- und Industrieabfälle organischer Herkunft werden bevorzugt vorbehandelt. Die Vorbehandlung umfasst z. B. eine Zerkleinerung und eine Vermengung.

Die Abfallverwertung wird optimal unter Einsatz eines Katalysators durchgeführt. Der Katalysator wird je nach Zusammensetzung der Abfälle im Verhältnis von 2 bis 15 % von der Masse der Abfälle gewählt.

Dabei wird als Katalysator optimal Natriumlauge benutzt.

Bevorzugt wird die Pyrolyse bei einem Überdruck im Bereich von 0,15 bis 0,7 atm durchgeführt.

Die Einrichtung zur Verwertung der Haushalts- und Industrieabfälle organischer Herkunft weist einen Reaktor für Pyrolyse, der aus zwei Teilen besteht, und ein System zur Trennung der Dampf-Gas-Pyrolyseprodukte auf. Diese Einrichtung ist gemäß der Erfindung durch eine Quelle einer elektromagnetischen Einwirkung ergänzt. Die Quelle der elektromagnetischen Einwirkung ist im zweiten Teil des Reaktors aufgebaut. Der Auslauf des zweiten Teils ist mit einem System zur Trennung der Dampf-Gas-Pyrolyseprodukte verbunden.

Die Quelle der elektromagnetischen Einwirkung ist als ein mit einer Gruppe von Entladungseinrichtungen gekoppelter Generator ausgebildet, so dass die elektromagnetische Einwirkung periodisch mittels einer elektrischen Entladung mit einer Durchschlagsspannung von 10 bis 50 kV und mit einer Entladungsfrequenz von 3 bis 500 Hz vorgenommen wird.

Der Reaktor für Pyrolyse ist bevorzugt unbeweglich ausgeführt.

Die Einrichtung kann zusätzlich eine Einheit zur Aufbereitung der Rohstoffe enthalten, die mit dem ersten Teil des Reaktors verbunden ist. Diese Einheit kann als eine Strangpresse (Extruder) ausgeführt sein.

Die Einrichtung ist bevorzugt mit einer Einheit zum Entladen des festen Produkts versehen, die als gasdichter Schieber ausgeführt ist.

Das System zur Trennung der Dampf-Gas-Pyrolyseprodukte weist einen Dampf-Gasgemisch-Kondensator, der als sein Auslauf fungiert, eine Brenneinrichtung und eine Trenneinheit für flüssige Medien auf. Diese Einrichtungen sind mit dem Dampf-Gasgemisch-Kondensator verbunden.

Der erste Teil des Reaktors ist bevorzugt als Aufnahmebehälter, als luftdichter Außen- und Innenzylinder ausgebildet, in den eine Schnecke mit veränderlicher Steigung eingebaut ist. Die Schnecke hat eine Hohlwelle, die mit einem Antrieb verbunden ist. Die Hohlwelle weist einen Ein- und Austrittsstutzen der Schnecke auf. Zwischen dem Innen- und Außenzylinder ist eine spiralförmige Führung angeordnet. Am Außenzylinder sind eine Gruppe von Anschlüssen für die Zuführung von Heißgasen und ein Anschluss für die Ableitung der Heißgase angeordnet. Der Austrittsstutzen ist mit dem Innenzylinder verbunden. Der zweite Teil des Reaktors für Pyrolyse ist als luftdichter Außenzylinder und Innenzylinder mit einer Schnecke ausgebildet. Die Schnecke ist auf einer Welle angeordnet. Die Welle ist mit einem Antrieb verbunden. Zwischen dem Innen- und Außenzylinder ist eine spiralförmige Führung angeordnet. Der Außenzylinder hat eine Gruppe von Anschlüssen für die Zuführung von Heißgasen und einen Anschluss für die Ableitung der Heißgase. Der Innenzylinder weist einen Anschluss mit einem Flansch zur Verbindung mit dem ersten Teil des Reaktors, einen Anschluss zur Ableitung der Dampf-Gas-Produkte und einen Anschluss zum Austritt der festen Produkte auf.

Die Quelle der elektromagnetischen Einwirkung ist als ein Generator ausgebildet, der mit einer Gruppe von Entladeeinrichtungen verbunden ist. Diese Gruppe ist auf dem Anschluss mit einem Flansch zur Verbindung mit dem ersten Teil des Reaktors angeordnet.

Der Dampf-Gasgemisch-Kondensator ist bevorzugt als ein Innen- und Außenzylinder ausgebildet. Zwischen den Zylindern ist eine Spirale für die Zirkulation des Dampf-Gasgemisches angeordnet. Der Innenzylinder mit der Ausführung gemäß der Erfindung weist Anschlüsse für die Zuführung und die Ableitung der Kühlflüssigkeit auf. Der Außenzylinder ist mit Anschlüssen für die Zuführung und Ableitung der dampfgasförmigen Produkte und einem Anschluss für die Ableitung der flüssigen Produkte versehen. Dabei ist der Außenzylinder mit einem Mantel ausgebildet. Im Mantel sind Anschlüsse für die Zuführung und Ableitung der Kühlflüssigkeit eingebaut.

Optimal sind der erste und der zweite Teil des Reaktors mit einem Wärmedämmstoff versehen.

Die Schnecke des zweiten Reaktorteils ist bevorzugt als Paddelschnecke ausgebildet.

Das angemeldete Verfahren und die Einrichtung ermöglichen es, die Effizienz des Abfallverwertungsvorgangs mittels einer Erhöhung der Qualität der Abfallverwertung und einer Beschleunigung des Abfallabbaus zu steigern.

Das wird dadurch erreicht, dass die während der Pyrolyse angewendete elektromagnetische Einwirkung eine Beschleunigung des Abbaus, eine bessere Abfallverwertung und eine zuverlässigere Trennung der verschiedenen Fraktionen der Kohlenwasserstoffe voneinander ermöglicht.

Gemäß der bevorzugten Ausführung der angemeldeten Einrichtung ist darin kein Drehreaktor vorhanden. Der Drehreaktor ist kompliziert bei der Fertigung und sehr teuer, da bei solchen Abmessungen die Abdichtung sehr erschwert ist. Darüber hinaus ist der Generator vom Standpunkt des Umweltschutzes und der Einhaltung der ökologischen Forderungen kritisch. Beim einem Drehreaktor ist die Entfernung eines Ansatzes von seinen Wänden ebenfalls erschwert.

Die Zweistufen-Abfallverwertung ermöglicht es, die Sicherheit des Vorgangs zu steigern und zur elektromagnetischen Einwirkung auf die flüssigen und gasförmigen Verwertungsprodukte im zweiten Teil des Reaktors überzugehen.

Die Ausführung des Reaktors mit zwei Teilen, die einen Innen- und einen Außenzylinder enthalten, ermöglicht es in der angemeldeten Einrichtung, die Steifigkeit der Konstruktion zu verbessern. Damit werden die Bedingungen für den Einsatz des Reaktors für eine Pyrolyse bei höheren Wärmebeanspruchungen geschaffen. Die Spirale zwischen den Zylindern verstärkt zusätzlich die Konstruktion und ermöglicht eine gleichmäßige Wärmeverteilung im Reaktor für Pyrolyse.

Bei niedrigerer (im Vergleich zum Prototyp) Temperatur der ersten Pyrolysestufe kommt keine Koksbildung zustande. Damit werden mehr flüssige Kohlenwasserstoffe gebildet. Das verbessert die Umweltfreundlichkeit des Vorgangs der Verwertung dank einer geringen Kohlendioxidausbeute.

Das angemeldete Verfahren und die Einrichtung zur Verwertung von organischen Haushalts- und Industrieabfällen hängen soweit zusammen, dass sie einen einheitlichen Erfindungsgedanken bilden.

Um das Verfahren zur Abfallverwertung auszuführen, wurde gezielt eine Einrichtung mit einzigartiger Konstruktion entwickelt. Diese Einrichtung ermöglicht es, Abfälle mit hoher Qualität und zuverlässig zu verwerten.

Folglich erfüllt die angemeldete Erfindung die Anforderungen über die Einheitlichkeit.

Die Erfindungen werden anhand von Ausführungsbeispielen und nachfolgenden Zeichnungen näher erläutert. Es zeigen:
- Fig. 1: das Übersichtsschema der Einrichtung,
- Fig. 2: die Konstruktion des ersten Teils des Reaktors,
- Fig. 3: die Konstruktion des zweiten Teils des Reaktors und
- Fig. 4: die schematische Darstellung der Konstruktion des Dampf-Gasgemischkondensators.

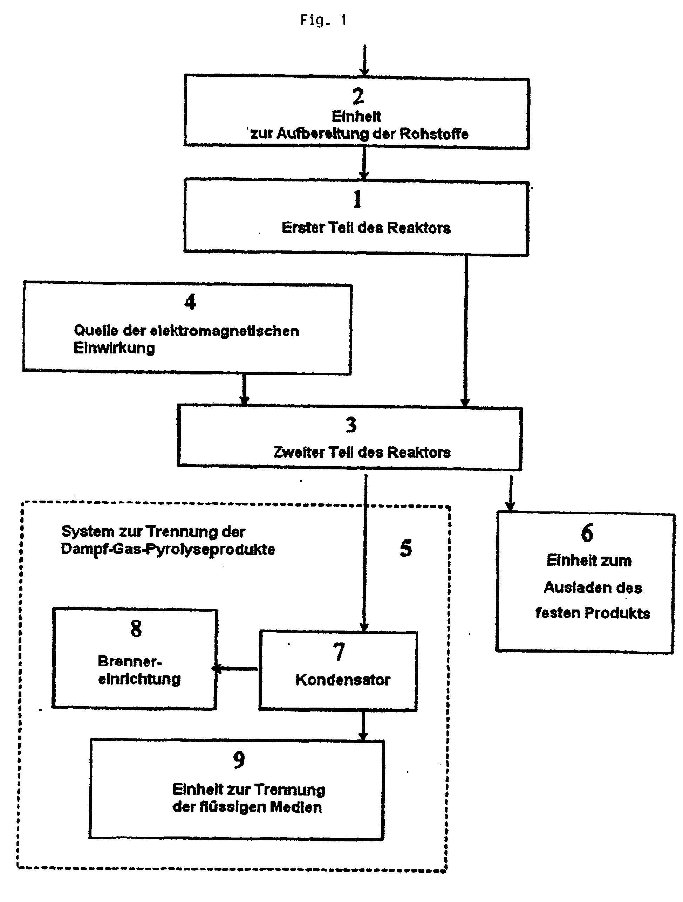

Die Einrichtung zur Verwertung von organischen Haushalts- und Industrieabfällen (Fig. 1) enthält:
- einen Reaktor für Pyrolyse, der aus einem ersten Teil 1 und einem zweiten Teil 3 besteht,
- ein System 5 zur Trennung der Dampf-Gas-Pyrolyseprodukte,
- eine Quelle 4 elektromagnetischer Einwirkung, die im zweiten Teil 3 des Reaktors eingebaut ist. Der Austritt des zweiten Teils 3 des Reaktors ist mit einem System 5 zur Trennung der Dampf-Gas-Pyrolyseprodukte verbunden.
Der Reaktor für Pyrolyse ist unbeweglich ausgebildet.

Die Einrichtung enthält zusätzlich eine Einheit 2 zur Aufbereitung der Rohstoffe, die mit dem ersten Teil 1 des Reaktors verbunden ist. Sie kann als eine Strangpresse (Extruder) ausgebildet sein.

Die Einrichtung ist mit einer Einheit 6 zum Ausladen des festen Produkts versehen, die in Form von gasdichten Schiebern ausgebildet ist.

Das System 5 zur Trennung der Dampf-Gas-Pyrolyseprodukte enthält einen Kondensator 7 des Dampf-Gasgemisches. Der Kondensator 7 ist als Austritt des Systems 5 ausgebildet. Das System 5 enthält auch eine Brenneinrichtung 8 und eine Einheit 9 zur Trennung der flüssigen Medien. Die Brenneinrichtung 8 und die Einheit 9 sind mit dem Kondensator 7 des Dampf-Gasgemisches verbunden.

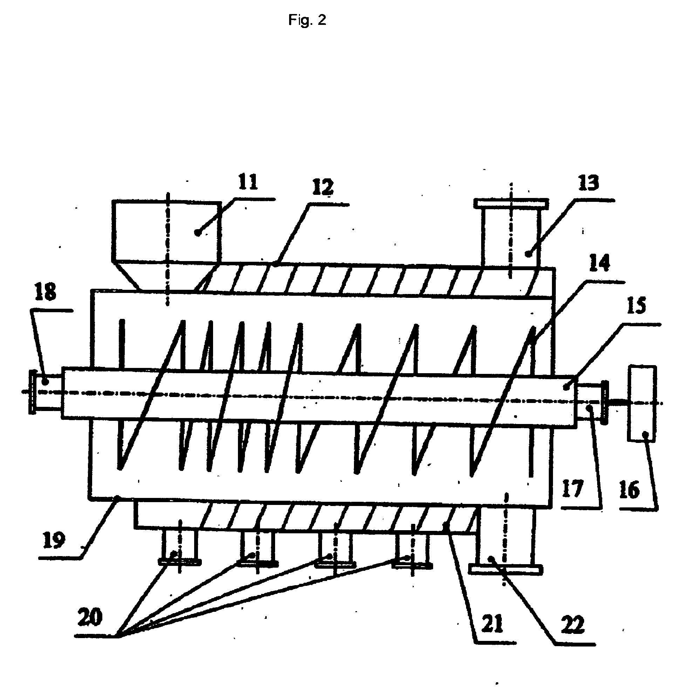

Der erste Teil 1 des Reaktors (Fig. 2) ist als ein Aufnahmebehälter 11, ein luftdichter Außenzylinder 12 und ein luftdichter Innenzylinder 19 ausgebildet. Der Innenzylinder 19 enthält eine Schnecke 14 mit veränderlicher Steigung. Die Schnecke hat eine Hohlwelle 15, die mit einem Antrieb 16 verbunden ist. Die Hohlwelle 15 enthält einen Eintrittsstutzen 17 und einen Austrittsstutzen 18 der Schnecke 14. Zwischen dem Innenzylinder 19 und dem Außenzylinder 12 ist eine spiralförmige Führung 21 angeordnet. Auf dem Außenzylinder 12 ist eine Gruppe von Anschlüssen 20 für die Zuführung von Heißgasen und ein Anschluss 13 für die Ableitung der Heißgase aufgebaut. Der Innenzylinder 19 ist mit einem Austrittsstutzen 22 verbunden.

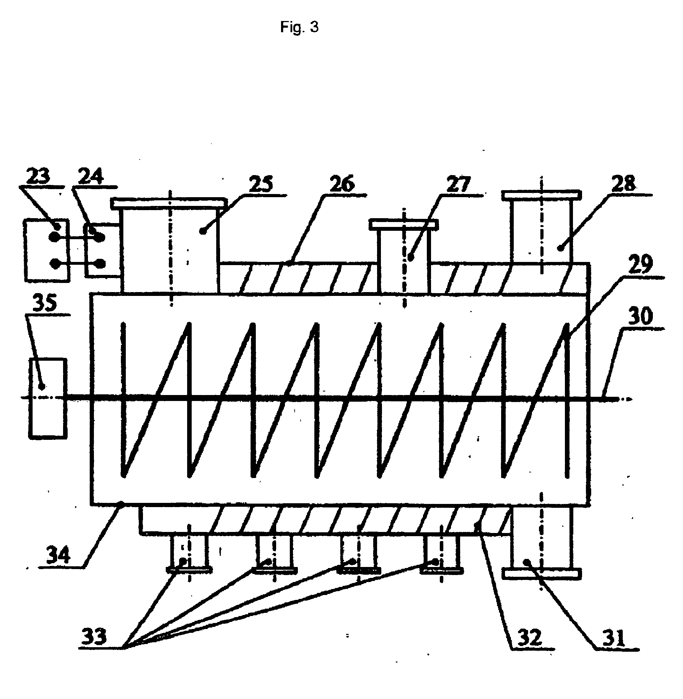

Der zweite Teil 3 des Reaktors für Pyrolyse (Fig. 3) ist als ein luftdichter Außenzylinder 26 und ein luftdichter Innenzylinder 34 ausgebildet. Der Innenzylinder 34 enthält eine Schnecke 29, die auf einer Welle 30 angeordnet ist Die Welle 30 ist mit einem Antrieb 35 verbunden. Zwischen dem Innenzylinder 34 und Außenzylinder 26 ist eine spiralförmige Führung 32 angeordnet. Die Schnecke 29 ist als Paddelschnecke ausgebildet. Der Außenzylinder 26 enthält eine Gruppe von Anschlüssen 33 für die Zuführung der Heißgase und einen Anschluss 28 für die Ableitung der Heißgase. Der Innenzylinder 34 weist einen Anschluss 25 mit einem Flansch zur Verbindung mit dem ersten Teil 1 des Reaktors, einen Anschluss 27 für die Ableitung der Dampf-Gasprodukte und einen Anschluss 31 für den Austritt der festen Produkte auf.

Die Quelle 4 der elektromagnetischen Einwirkung ist als ein Generator 23 ausgebildet, welcher mit einer Gruppe von Entladeeinrichtungen 24 ausgestattet ist. Die Gruppe der Entladeeinrichtungen 24 ist auf dem Anschluss 25 mit einem Flansch aufgebaut, der zur Verbindung mit dem ersten Teil 1 des Reaktors dient.

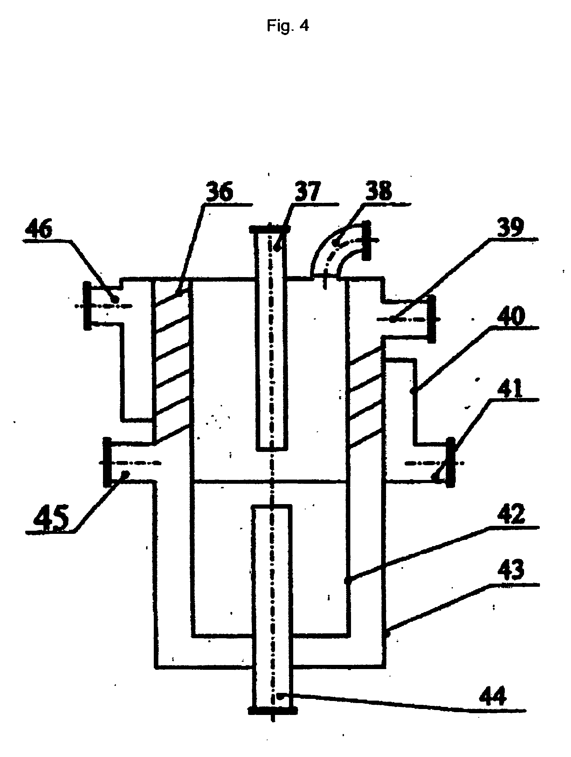

Der Kondensator 7 des Dampf-Gasgemisches (Fig. 4) ist als Außenzylinder 43 und als Innenzylinder 42 ausgebildet. Zwischen diesen Zylindern 43 und 42 ist eine Spirale 36 für den Kreislauf des Dampf-Gasgemisches angeordnet. Der Innenzylinder 42 ist mit Anschlüssen 37 für eine Zuführung und die Ableitung von Kühlflüssigkeit und mit einem Anschluss 44 für die Ableitung der flüssigen Produkte versehen. Der Außenzylinder 43 ist mit Anschlüssen 39 und 45 für den Ein- und Austritt der dampf- und gasförmigen Produkte versehen. Der Außenzylinder 43 ist mit einem umfassenden Mantel 40 versehen. Der Mantel 40 ist mit Anschlüssen 41 für die Zuführung und Ableitung 46 der Kühlflüssigkeit versehen.

Der erste und der zweite Teil 1 und 3 des Reaktors sind mit Wärmedämmstoff versehen (in den Zeichnungen nicht abgebildet).

Das Verfahren und die Einrichtung werden folgenderweise ausgeführt.

Die organischen Haushalts- bzw. Industrieabfälle mit einer Korngröße von über 2,5 cm, z. B. Knochen der Tiere, gummitechnische Erzeugnisse (Reifen, Schläuche usw.) werden vorbehandelt. Die Vorbehandlung kann eine Zerkleinerung der Abfälle in einer Einheit 2 zur Aufbereitung der Rohstoffe (Fig. 1) beinhalten. Diese Einheit 2 stellt eine handelsübliche Industrie-Zerkleinerungsmaschine, z. B. eine Strangpresse, dar.

Das zerkleinerte Rohgut kommt in den Aufnahmebehälter 11 (Fig. 2) des ersten Teils 1 des Reaktors (Fig. 1).

Wenn die Vorbehandlung der Abfälle (z. B. Mist, Holzspäne oder andere Abfälle mit einer Stückchengröße (Durchmesser) von unter 2,5 cm) nicht erforderlich ist, werden die Abfälle zusammen mit dem Katalysator, z. B. Natriumlauge in den Aufnahmebehälter 11 (Fig. 2) im Verhältnis 2 - 15 % vom Ausgangsgewicht der Abfälle gefördert. Wenn die Abfälle vorbehandelt werden, sollte der Katalysator bevorzugt während der Vorbehandlung in die Einheit 2 zur Aufbereitung der Rohstoffe zugesetzt werden, um den Katalysator möglichst gleichmäßig zu verteilen. Je nach der Art der Abfälle wird das Prozentverhältnis erfahrungsgemäß festgelegt Für die Fleischereiabfälle beträgt die Natriumlaugenmenge z. B. 4 - 6 % vom Ausgangsgewicht der Abfälle.

Die Abfälle bewegen sich aus dem Aufnahmebehälter 11 mittels der Schnecke 14 mit veränderlicher Steigung über den Innenzylinder 19 (Fig. 2) des ersten Teils 1 des Reaktors (Fig. 1). Die Veränderung der Steigung der Schnecke 14 kann nach einem der zwei Verfahren erreicht werden: Veränderung des Schneckenwellendurchmessers oder Veränderung der Steigung. Die Verwendung der Schnecke 14 mit veränderlicher Steigung ermöglicht es, einen Flüssigkeitsverschluss im ersten Drittel des ersten Teils 1 des Reaktors (Fig. 1) herzustellen. Der Flüssigkeitsverschluss stellt eine Dichtheit des Reaktors und die Möglichkeit eines ununterbrochenen Vorschubs der Abfälle sicher. Die Schneckenwelle 15 ist als Hohlwelle mit dem Eintrittsstutzen 17 der Schnecke 14 für die Zuführung der Spülgase und dementsprechend mit einem Austrittsstutzen 18 der Schnecke 14 (Fig. 2) für die Ableitung der Spülgase ausgebildet.

Eine solche bauliche Ausführung ermöglicht eine Beschleunigung des Vorgangs der Abfallerwärmung im ersten Teil 1 des Reaktors. Die Hohlwelle 15 der Schnecke 14 wird durch den Antrieb 16 angetrieben. Der Antrieb 16 ermöglicht die Regelung der Drehgeschwindigkeit der Schnecke 14 mit veränderlicher Steigung je nach dem Erfordernis. Die Konstruktion des ersten Teils 1 des Reaktors ist als Außenzylinder 12 und als Innenzylinder 19 ausgebildet. Zwischen den Zylindern 12 und 19 befindet sich die spiralförmige Führung 21. Eine solche Konstruktion ermöglicht es, eine eigenartige Heizkammer zu bilden. Die Gruppe von Anschlüssen 20 für die Zuführung der Heißgase dient der Zuleitung der Spülgase von den Brennereinrichtungen (in den Zeichnungen nicht abgebildet), die z. B. als Gasbrenner ausgebildet sind. Der Anschluss 13 ist für die Ableitung der Heißgase vorgesehen. Die Zuleitung der Spülgase an die Gruppe von Anschlüssen 20 und an den Anschluss 17 kann auch aus dem zweiten Teil 3 des Reaktors über den Anschluss 28 für die Ableitung der Heißgase oder kombiniert von den Brennereinrichtungen 8 und dem zweiten Teil 3 des Reaktors erfolgen. Die spiralförmige Führung 21 (Fig. 2) ermöglicht es, den Strom der Heißgase über die spiralförmige Führung 21 rings um den Innenzylinder 19 zu lenken. Das stellt eine Gleichmäßigkeit der Erwärmung der Konstruktion des ersten Teils 1 des Reaktors sicher. Dank einer solchen Anordnung für die Erwärmung ist eine gleichmäßige lineare Erweiterung der Metallkonstruktionen erreicht, die bei der Projektierung und der Fertigung des Reaktors vorgesehen wird. Darüber hinaus ermöglicht die Konstruktion des ersten Teils 1 des Reaktors auch eine Verstärkung des Wärmeübertragungsvorgangs aus der angeordneten Heizkammer in den Reaktor hinein. Die Nutzung der heißen Abgase aus dem zweiten Teil 3 des Reaktors für die Erwärmung des ersten Teils 1 des Reaktors (Fig. 1.) ermöglicht es, die Energie dieser Gase so voll wie möglich zu nutzen. Damit kann die Einrichtung sparsamer betrieben werden. Dank der Schnecke 14 mit veränderlicher Steigung werden die organischen Abfälle innerhalb des ersten Teils 1 des Reaktors zum Austrittsstutzen 22 weiter gefördert. Der Austrittsstutzen 22 verbindet den ersten Teil 1 und den zweiten Teil 3 des Reaktors. Dadurch kommen die Pyrolyseprodukte in den zweiten Teil 3 des Reaktors (Fig. 1). Im ersten Teil 1 des Reaktors sind die organischen Abfälle einer Niedertemperaturpyrolyse ausgesetzt und bis zu einer Temperatur von 200 - 300° C erwärmt. Die Wahl der Temperatur im angegebenen Bereich ermöglicht es, die Koksbildung an den Wänden des ersten Teils 1 des Reaktors zu vermeiden und eine Maximalmenge von flüssigen Kohlenwasserstoffen zu erhalten.

Um die Eindringung von Sauerstoff in den Reaktor während beider Stufen der Pyrolyse zu vermeiden, wird der Überdruck innerhalb von 0,15 bis 0,7 atm. erhalten. Bei höheren Drücken hängt die Sicherstellung der Dichtheit des Reaktors für Pyrolyse mit bestimmten Schwierigkeiten zusammen. Es wurde erfahrungsgemäß festgestellt, dass beim Erreichen eines Überdrucks ab 0,15 atm. Sauerstoff nicht garantiert in den Reaktor gelangen kann.

Der Austrittsstutzen 22 (Fig.2) des ersten Teils 1 des Reaktors ist mit dem Flansch des Anschlusses 25 (Fig. 3) des zweiten Teils 3 des Reaktors (Fig. 1) verbunden.

Die elektromagnetische Einwirkung auf die Pyrolyseprodukte des zweiten Teils 3 des Reaktors erfolgt durch die Quelle 4 der elektromagnetischen Einwirkung. Die Quelle 4 ist als ein Generator 23 ausgebildet, der mit einer Gruppe von den auf dem Anschluss 25 angeordneten Entladeeinrichtungen 24 verbunden ist (Fig. 3). Die elektromagnetische Einwirkung erfolgt bevorzugt regelmäßig, da dies effizienter auf die Abfälle einwirkt.

Die elektromagnetische Einwirkung erfolgt durch eine regelmäßige elektrische Entladung mit einer Frequenz von 3 bis 500 Hz und einer Durchschlagsspannung von 10 bis 50 kV.

Es wurde erfahrungsgemäß festgestellt, dass je nach der gewählten Frequenz verschiedene Zusammensetzungen der Kohlenwasserstoffe erhalten werden. Die Wahl der Durchschlagsspannung hängt von den Dimensionen des Reaktors für die Pyrolyse ab. Je kleiner der Reaktor ist, desto niedriger ist die Durchschlagsspannung.

Der Aufbau des zweiten Teils 3 des Reaktors ist der Konstruktion des ersten Teils 1 des Reaktors ähnlich. Der Innenzylinder 34 und der Außenzylinder 26 bilden eine Heizkammer im zweiten Teil 3 des Reaktors (Fig. 3). Zwischen den Zylindern 34 und 26 befindet sich die spiralförmige Führung 32. Das Heißgas für die Erhitzung des zweiten Teils 3 des Reaktors kommt über die Gruppe der Anschlüsse 33 (Fig. 3) zum Anschluss der Brennereinrichtungen (in den Zeichnungen nicht abgebildet).Um die Pyrolyseprodukte im zweiten Teil 3 des Reaktors (Fig. 1) sich bewegen zu lassen und sie zu vermischen, wird die Paddelschnecke 29 (Fig. 3) mit der Welle 30 (Fig. 2) benutzt. Die Welle 30 wird durch den Antrieb 35 (Fig. 3) mit veränderlicher Umdrehungsgeschwindigkeit angetrieben. Dies ermöglicht eine stufenlose Temperaturregelung im zweiten Teil 3 des Reaktors. Die zweite Stufe der Pyrolyse wird bei einer Temperatur innerhalb von 400 bis 1200° C durchgeführt. Dank der Temperaturverlaufregelung im zweiten Teil 3 des Reaktors (Fig. 1) kann eine qualitative Zusammensetzung der Pyrolyseprodukte sowohl in der dampfgasförmigen Phase als auch in der festen Phase beeinflusst werden. So entsteht bei höheren Temperaturen ein festes Pyrolyseprodukt mit höherer Qualität, welches als Sorptionsmittel verwendet werden kann. Der optimale Temperaturverlauf der Pyrolyse wurde erfahrungsgemäß festgestellt und liegt im Bereich von 600 bis 900° C. Dadurch wird eine optimale qualitative Zusammensetzung der Pyrolyseprodukte erreicht, und der Reaktor für Pyrolyse wird optimal betrieben. Erfahrungsgemäß wurde festgestellt, dass ein Temperaturverlauf von über 1200° C den Ausrüstungsverschleiß erhöht und der Anwendung von technisch spezifischen, teuren Werkstoffen bedarf.

Eine Temperatur unter 400° C während der zweiten Stufe der Pyrolyse stellt keinen vollwertigen, guten Abbau der Abfälle sicher. Die Dampf-Gas-Pyrolyseprodukte werden über den Anschluss 27 (Fig. 3) auf dem Innenzylinder 34 abgeleitet. Die festen Produkte der Abfallverwertung werden über den Anschluss 31 in die Einheit 6 zur Ausladung der festen Produkte (Fig. 1) abgeleitet.

Die Konstruktion der Paddelschnecke 29 (Fig. 3) ermöglicht eine ungehinderte Bewegung der Pyrolysegase im zweiten Teil 3 des Reaktors. Damit werden sie über den Anschluss 27 (Fig. 3), der mit dem System 5 zur Trennung der Dampf-Gas-Pyrolyseprodukte (Fig. 1) verbunden ist, unmittelbar zum Kondensator 7 (Fig. 1) mit Hilfe der Stutzen 39 oder 45 für den Ein- und Austritt der Dampf- und Gasprodukte (Fig. 4) gefördert. Der Kondensator 7 (Fig. 4) kann als eine Gruppe von Kondensatoren ausgebildet werden. Der Kondensator 7 ist dafür vorgesehen, die Dampf-Gas-Pyrolyseprodukte zu kühlen und kondensieren zu lassen und um die Medien Gas/ Flüssigkeit voneinander zu trennen. Das System 5 zur Trennung der Dampf-Gas-Pyrolyse-produkte (Fig. 1) besteht aus einer Gruppe von Kondensatoren 7 (Fig. 1), bevorzugt sechs davon. Die Kondensatoren 7 werden in Serie bzw. parallel geschaltet. Ein Kondensator 7 (Fig. 4) ist in Form von zwei ineinander eingesetzten Zylindern ausgebildet. Der Außenzylinder 43 (Fig. 4) des Kondensators 7 ist mit dem Kühlmantel 40 gekoppelt. Der Kühlmantel 40 hat einen Anschluss 41 für die Zuleitung der Kühlflüssigkeit und einen Anschluss 46 für die Ableitung der Kühlflüssigkeit sowie Stutzen 39 und 45 für den Ein- und Austritt der dampfgasförmigen Pyrolyseprodukte. Die Kühlflüssigkeit wird in den oberen Teil des Innenzylinders 42 (Fig. 4) des Kondensators 7 über den Anschluss 37 gefördert und über den Anschluss 38 abgeleitet. Der untere Teil hat einen Flüssigkeitsverschluss mittels des Anschlusses 44. Dies ist für die Ableitung der flüssigen Pyrolyseprodukte über den Anschluss 44 und für die Abdichtung gegen Eindringung der Pyrolysegase erforderlich. Die Spirale 36 liegt zwischen dem Innenzylinder 42 und dem Außenzylinder 43 und stellt eine Bewegung des Dampf-Gasgemisches der Pyrolyseprodukte über die Spirale 36 sicher. Das verlängert die Aufenthaltsdauer des Dampf-Gasgemisches der Pyrolyseprodukte im Kondensator 7 und stellt eine intensivere Kühlung sicher. Die somit entstehenden Fliehkräfte ermöglichen eine bessere Entfernung der kondensierten Flüssigkeitstropfen aus dem Dampf-Gasstrom der Pyrolyseprodukte.

Die Kondensatoren 7 sind mit der Einheit 9 zum Trennen der flüssigen Medien (Fig. 1) mit Hilfe der Anschlüsse 44 für die Ableitung der flüssigen Produkte verbunden. Die flüssigen Pyrolyseprodukte werden in der Einheit 9 zum Trennen der flüssigen Medien gesammelt und in Bestandteile getrennt, in flüssige Kohlenwasserstoffe und in wasserhaltige Pyrolyseprodukte. Der Kondensator 7 (wenn es eine Gruppe von Kondensatoren ist, dann der letzte Kondensator in der Gruppe) ist über den Stutzen 39 oder 45 für den Ein- und Austritt (Fig. 4) mit der Brennereinrichtung 8 gekoppelt, die die Verbrennung der Pyrolysegase sicherstellt.

Es wurden Experimente mit einer Versuchsanlage gemäß dem angemeldeten Verfahren und der angemeldeten Einrichtung durchgeführt. Die Beschreibung ihrer konkreten Ausführung ist in den Beispielen angeführt.

### Beispiel 1

1000 kg Fleisch- und Knochenabfälle mit einer Feuchtigkeit von 50 bis 70 % wurden unter optimalen Betriebsbedingungen verwertet.

Die erste Pyrolysestufe wurde bei einer Temperatur von 250 - 300° C und die zweite Pyrolysestufe bei einer Temperatur von 750 - 850° C, einem Überdruck von 0,3 atm., einer Frequenz der periodischen elektromagnetischen Einwirkung von 30 Hz und einer Durchschlagsspannung von 30 kV durchgeführt. Als Katalysator wurde Natriumlauge von etwa 4 % der Abfallmenge eingesetzt.

Infolge der Verwertung wurde gewonnen:
- ein festes Produkt (Krümelkohle, Schüttdichte 300 - 400 kg/m³, Teilchengröße ab 5 µm) von 10 -13 % der Masse der Abfälle;
- 10 - 15 % eines gasförmigen brennbaren Produkts (ca. 20 Komponenten, darunter ca. 60 % Kohlenwasserstoffe C₁ - C₄);
- ca. 20 - 30 % (je nach Ausgangsfeuchtigkeit und Zusammensetzung der Abfälle) einer Flüssigkeit, die Kohlenwasserstoffe C₆ - C₂₅ (70 % davon sind Kohlenwasserstoffe C₈ - C₁₆) und sonstige organische Stoffe, darunter heterozyklische Komponenten mit einer max. Kohlenstoffatomzahl 20, enthält. Ihrer qualitativen Zusammensetzung nach ist diese Flüssigkeit dem Erdöl (paraffinischnaphthenisch-aromatische Klasse) ähnlich.

### Beispiel 2

1000 kg Fleisch- und Knochenabfälle mit einer Feuchtigkeit von 50 bis 70 % wurden verwertet. Die erste Pyrolysestufe wurde bei einer Temperatur von 200 - 250° C und die zweite Pyrolysestufe bei einer Temperatur von 400 - 450° C, bei einem Überdruck von 0,15 atm., einer Frequenz der periodischen elektromagnetischen Einwirkung von 3 Hz und einer Durchschlagsspannung von 10 kV vorgenommen.

Der benutzte Katalysator, Natriumlauge, wurde in einer Menge von 2 % der Menge der Abfälle verwendet.

Infolge der Verwertung wurde gewonnen:
- ein festes Produkt (Krümelkohle, Schüttdichte 800 - 900 kg/m³, Teilchengröße ab 5 µm) von 15 -18 % der Masse der Abfälle;
- 5 - 7 % eines gasförmigen brennbaren Produkts (ca. 20 Komponenten, darunter ca. 45 % der Kohlenwasserstoffe C₁ - C₆);
- ca. 25 - 35 % (je nach Ausgangsfeuchtigkeit und Zusammensetzung der Abfälle) einer Flüssigkeit, die Kohlenwasserstoffe C₈ - C₂₆ und sonstige organische Stoffe (70 % davon sind Kohlenwasserstoffe C₁₀ - C₂₀) enthält darunter heterozyklische Komponenten mit einer max. Kohlenstoffatomzahl 22.

### Beispiel 3

1000 kg Fleisch- und Knochenabfälle mit einer Feuchtigkeit von 50 bis 70 % wurden verwertet. Die erste Pyrolysestufe wurde bei einer Temperatur von 300° C und die zweite Pyrolysestufe bei einer Temperatur von 1100 - 1200° C, bei einem Überdruck von 0,7 atm., einer Frequenz der periodischen elektromagnetischen Einwirkung von 400 Hz und einer Durchschlagsspannung von 50 kV vorgenommen.

Es wurde Katalysator, Natriumlauge, in einer Menge von 10 % der Menge der Abfälle verwendet.
Infolge der Verwertung wurde gewonnen:
- ein festes Produkt (Krümelkohle, Schüttdichte 200 - 300 kg/m³, Teilchengröße ab 5 µm) von 9 -11 % der Masse der Abfälle;
- 13 -17 % eines gasförmigen brennbaren Produkts (ca. 20 Komponenten, darunter ca. 55 % der Kohlenwasserstoffe C₁ - C₃);
- ca. 20 - 25 % (je nach Ausgangsfeuchtigkeit und Zusammensetzung der Abfälle) einer Flüssigkeit, die Kohlenwasserstoffe C₆ - C₂₀ und sonstige organische Stoffe (65 % davon sind Kohlenwasserstoffe C₇ - C₁₄), darunter heterozyklische Komponenten mit einer max. Kohlenstoffatomzahl 16 enthält. Dabei wurde ebenfalls die qualitative Zusammensetzung der Kohlenwasserstoffe geändert, so dass die Komponentenanzahl zunahm.

Die Erfindung kann für die Verwertung von Haushalts-, Landwirtschafts- und Industrieabfällen organischer Herkunft eingesetzt werden, so dass infolge der Abfallverwertung Biogas, flüssige Mineralölprodukte und feste Brennstoffelemente gewonnen werden.

## Patentansprüche

1. Verfahren zur Verwertung von organischen Haushalts- und Industrieabfällen, einschließlich einer ersten und einer zweiten Stufe einer Pyrolyse, einer Trennung der Pyrolyseprodukte in Fraktionen und einer Verwertung jeder Fraktion zur Gewinnung nutzvoller Produkte, wobei
die zweite Pyrolysestufe bei gleichzeitiger elektromagnetischer Einwirkung auf die Pyrolyseprodukte durchgeführt wird, **dadurch gekennzeichnet, dass** die elektromagnetische Einwirkung periodisch mittels einer elektrischen Entladung mit einer Durchschlagsspannung von 10 bis 50 kV und mit einer Entladungsfrequenz von 3 bis 500 Hz vorgenommen wird.

2. Verfahren nach Anspruch 1,
**dadurch gekennzeichnet,**
**dass** die primäre Pyrolyse bei einer Temperatur von 200 - 300° C und die sekundäre Pyrolyse bei einer Temperatur von 400 -1200° C vorgenommen wird.

3. Verfahren nach Anspruch 1,
**dadurch gekennzeichnet,**
**dass** die Trennung der Pyrolyseprodukte in Fraktionen mittels einer Abscheidung flüssiger Kohlenwasserstoffe vom Wasser, einer Ableitung von gasförmigen Produkten, ihrer Kühlung und Kondensation und einer Ableitung von festen Produkten erfolgt.

4. Verfahren nach Anspruch 1,
**dadurch gekennzeichnet,**
**dass** die organischen Haushalts- und Industrieabfälle vorbehandelt werden, wobei die Vorbehandlung z. B. eine Zerkleinerung und eine Vermengung einschließt.

5. Verfahren nach Anspruch 1,
**dadurch gekennzeichnet,**
**dass** die Abfallverwertung unter Anwesenheit von einem Katalysator durchgeführt wird, wobei der Katalysator je nach Zusammensetzung der Abfälle im Verhältnis von 2 - 15 % der Masse der Abfälle gewählt wird.

6. Verfahren nach Anspruch 5,
**dadurch gekennzeichnet,**
**dass** als Katalysator Natriumlauge verwendet wird.

7. Verfahren nach Anspruch 1,
**dadurch gekennzeichnet,**
**dass** die Pyrolyse bei einem Überdruck innerhalb von 0,15 bis 0,7 atm. vorgenommen wird.

8. Einrichtung zur Verwertung von organischen Haushalts- und Industrieabfällen mit einem Reaktor für Pyrolyse, der aus zwei Teilen (1, 3) besteht, und mit einem System (5) zur Trennung der Dampf-Gas-Pyrolyseprodukte, wobei die Einrichtung zusätzlich mit einer Quelle (4) der elektromagnetischen Einwirkung ergänzt ist, die auf dem zweiten Teil (3) des Reaktors aufgebaut ist, wobei der Austritt des zweiten Teils (3) mit dem System (5) zur Trennung der dampfgasförmigen Pyrolyseprodukte verbunden ist, **dadurch gekennzeichnet, dass** die Quelle (4) der elektromagnetischen Einwirkung als ein mit einer Gruppe von Entladungseinrichtungen (24) gekoppelter Generator (23) ausgebildet ist, so dass die elektromagnetische Einwirkung mittels einer elektrischen Entladung mit einer Durchschlagsspannung von 10 bis 50 kV und mit einer Entladungsfrequenz von 3 bis 500 Hz vorgenommen wird.

9. Einrichtung nach Anspruch 8,
**dadurch gekennzeichnet,**
**dass** der Reaktor für Pyrolyse unbeweglich ist.

10. Einrichtung nach Anspruch 8,
**dadurch gekennzeichnet,**
**dass** sie zusätzlich eine Einheit (2) zur Aufbereitung der Rohstoffe aufweist, die als eine Strangpresse (Extruder) ausgebildet ist, welche mit dem ersten Teil (1) des Reaktors verbunden ist.

11. Einrichtung nach Anspruch 8,
**dadurch gekennzeichnet,**
**dass** sie mit einer Einheit (6) zum Ausladen des festen Produkts versehen ist, die in Form von gasdichten Schiebern ausgebildet ist.

12. Einrichtung nach Anspruch 8,
**dadurch gekennzeichnet,**
**dass** das System (5) zur Trennung der Dampf-Gas-Pyrolyseprodukte als ein Kondensator (7) ausgebildet ist, dessen Eintritt (9) den Eintritt des Systems (5) zur Trennung der Dampf-Gas-Pyrolyseprodukte, der Brennereinrichtung (8) und der Einheit zur Trennung der flüssigen mit dem Kondensator (7) verbundenen Medien darstellt.

13. Einrichtung nach Anspruch 8,
**dadurch gekennzeichnet,**
**dass** der erste Teil (1) des Reaktors als ein Aufnahmebehälter (11) mit einem luftdichten Außenzylinder (12) und einem luftdichten Innenzylinder (19) ausgebildet ist,
**dass** der Innenzylinder (19) eine Schnecke (14) mit veränderlicher Steigung aufweist,
**dass** die Schnecke (14) eine Hohlwelle (15) aufweist, die mit einem Antrieb (16) verbunden ist;
**dass** die Hohlwelle (15) der Schnecke (14) einen Ein- und einen Austrittsstutzen aufweist,
**dass** zwischen dem Innen- und Außenzylinder (19 und 12) eine spiralförmige Führung (21) angeordnet ist,
**dass** am Außenzylinder (12) eine Gruppe von Anschlüssen (20) für die Zuführung von Heißgasen und ein Anschluss (13) für die Ableitung der Heißgase aufgebaut ist und
**dass** der Innenzylinder (19) mit einem Austrittsstutzen (22) verbunden ist.

14. Einrichtung nach Anspruch 8,
**dadurch gekennzeichnet,**
**dass** der zweite Teil (3) des Reaktors für Pyrolyse als luftdichter Außenzylinder (26) und als luftdichter Innenzylinder (34) ausgebildet ist,
**dass** der Innenzylinder (34) eine auf einer Welle (30) angeordnete Schnecke (29) aufweist, dass die Welle (30) mit einem Antrieb (35) verbunden ist;
**dass** zwischen dem Innen- und Außenzylinder (34 und 26) eine spiralförmige Führung (32) angeordnet ist, wobei der Außenzylinder (26) eine Gruppe von Anschlüssen (33) für die Zuführung von Heißgasen und einen Anschluss (28) für die Ableitung der Heißgase aufweist und
**dass** der Innenzylinder (34) dabei einen Anschluss (25) mit einem Flansch zur Verbindung mit dem ersten Teil (1) des Reaktors, einen Anschluss (27) zur Ableitung der Dampf-Gas-Produkte und einen Anschluss (31) zum Austritt der festen Produkte aufweist.

15. Einrichtung nach Anspruch 14,
**dadurch gekennzeichnet,**
**dass** die Schnecke (29) des zweiten Teils (3) des Reaktors als Paddelschnecke ausgebildet ist.

16. Einrichtung nach Anspruch 8,
**dadurch gekennzeichnet,**
**dass** die Gruppe der Entladeeinrichtungen (24) auf dem Anschluss (25) zur Verbindung des ersten und des zweiten Teils (1 und 3) des Reaktors aufgebaut ist.

17. Einrichtung nach Anspruch 8,
**dadurch gekennzeichnet,**
**dass** der Kondensator (7) als ein Innenzylinder (42) und ein Außenzylinder (43) ausgebildet ist,
**dass** zwischen den Zylindern (42, 43) eine Spirale (36) für die Zirkulation des Dampf-Gasgemisches angeordnet ist und der Innenzylinder (42) mit Anschlüssen (37) für die Zuführung und Ableitung der Kühlflüssigkeit und einem Anschluss (44) für die Ableitung der flüssigen Produkte versehen ist,
**dass** der Außenzylinder (43) mit Anschlüssen (39 und 45) für den Ein- und Austritt der dampf- und gasförmigen Produkte ausgerüstet ist und
**dass** der Außenzylinder (43) einen den Außenzylinder (43) umfassenden Mantel (40) aufweist, wobei der Mantel (40) mit Anschlüssen (41, 46) für die Zuführung und Ableitung der Kühlflüssigkeit versehen ist.

18. Einrichtung nach Anspruch 8,
**dadurch gekennzeichnet,**
**dass** der erste und der zweite Teil (1 und 3) des Reaktors mit Wärmedämmstoff versehen ist.

## Claims

1. A method for the recycling of organic household- and industrial waste, including a first and a second step of a pyrolysis, a separation of pyrolysis products into fractions and a recycling of each fraction for the extraction of useful products, wherein the second pyrolysis step is carried out with simultaneous electromagnetic action on the pyrolysis products,
**characterized in that**
the electromagnetic action is undertaken periodically by means of an electrical discharge with a breakdown voltage of 10 to 50 kV and with a discharge frequency of 3 to 500 Hz.

2. A method according to claim 1,
**characterized in**
**that** the primary pyrolysis is carried out at a temperature of 200 - 300°C and the secondary pyrolysis at a temperature of 400 - 1200°C.

3. A method according to claim 1,
**characterized in**
**that** the separation of the pyrolysis products into fractions occurs by means of a separation of liquid hydrocarbons from the water, a discharge of gaseous products, their cooling and condensation and a discharge of solid products.

4. A method according to claim 1,
**characterized in**
**that** the organic household- and industrial wastes are pretreated, wherein the pretreatment includes, for example, a crushing and a mixing.

5. A method according to claim 1,
**characterized in**
**that** the waste recyclying is carried out in the presence of a catalyst, wherein the catalyst is selected depending on the composition of the waste at a ratio of 2 - 15% of the mass of the waste.

6. A method according to claim 5,
**characterized in**
**that** sodium lye is used as a catalyst.

7. A method according to claim 1,
**characterized in**
**that** the pyrolysis is performed at a positive pressure within 0.15 to 0.7 atmospheres.

8. An installation for the recycling of organic household- and industrial wastes with a reactor for pyrolysis, which consists of two parts (1, 3), and with a system (5) for the separation of the steam-gas pyrolysis products, wherein the installation is supplemented additionally with a source (4) of the electromagnetic action, which is built on the second part (3) of the reactor, wherein the outlet of the second part (3) is connected to the system (5) for the separation of the steam-gaseous pyrolysis products, **characterized in that** the source (4) of the electromagnetic action is designed as a generator (23) coupled with a group of discharge devices (24), so that the electromagnetic action is carried out by means of an electrical discharge with a breakdown voltage of 10 to 50 kV and with a discharge frequency of 3 to 500 Hz.

9. An installation according to claim 8,
**characterized in**
**that** the reactor for pyrolysis is immobile.

10. An installation according to claim 8,
**characterized in**
**that** it additionally has a unit (2) for processing the raw material, which is designed as an extruder, which is connected to the first part (1) of the reactor.

11. An installation according to claim 8,
**characterized in**
**that** it is provided with a unit (6) for discharging the solid products, which is designed in the form of gastight slide valves.

12. An installation according to claim 8,
**characterized in**
**that** the system (5) for the separation of the steam-gas pyrolysis products is designed as a condenser (7), the inlet (9) of which constitutes the inlet of the system (5) for the separation of the steam-gas pyrolysis products, the burner device (8) and the unit for the separation of the liquid media connected to the condenser (7).

13. An installation according to claim 8,
**characterized in**
**that** the first part (1) of the reactor is designed as a receiving container (11) with an airtight outer cylinder (12) and an airtight inner cylinder (19),
**that** the inner cylinder (19) has a screw (14) with variable slope,
**that** the screw (14) has a hollow shaft (15), which is connected to a drive (16),
**that** the hollow shaft (15) of the screw (14) has an inlet and an outlet connect ion,
**that** a spiral guide (21) is arranged between the inner- and outer cylinder (19 and 12),
**that** a group of connections (20) for supplying hot gases and a connection (13) for discharging hot gases is built on the outer cylinder (12) and
**that** the inner cylinder (19) is connected to an outlet connection (22).

14. An installation according to claim 8,
**characterized in**
**that** the second part (3) of the reactor for pyrolysis is designed as an airtight outer cylinder (26) and as an airtight inner cylinder (34),
**that** the inner cylinder (34) has a screw (29) arranged on a shaft (30), that the shaft (30) is connected to a drive (35);
**that** between the inner- and outer cylinder (34 and 26) a spiral guide (32) is arranged, wherein the outer cylinder (26) has a group of connections (33) for supplying hot gases and a connection (28) for discharging hot gases and
**that** the inner cylinder (34) thereby has a connection (25) with a flange for connecting to the first part (1) of the reactor, a connection (27) for discharging the steam-gas products and a connection (31) for discharging the solid products.

15. An installation according to claim 14,
**characterized in**
**that** the screw (29) of the second part (3) of the reactor is designed as a paddle screw.

16. An installation according to claim 8,
**characterized in**
**that** the group of discharge devices (24) is built on the connection (25) for connecting the first and the second part (1 and 3) of the reactor.

17. An installation according to claim 8,
**characterized in**
**that** the condenser (7) is designed as an inner cylinder (42) and an outer cylinder (43),
**that** a spiral (36) for the circulation of the steam-gas mixture is arranged between the cylinders (42, 43) and the inner cylinder (42) is provided with connections (37) for supplying and discharging the cooling liquid and a connection (44) for discharging the liquid products,
**that** the outer cylinder (43) is equipped with connections (39 and 45) for the inlet and outlet of the steam and gaseous products and
**that** the outer cylinder (43) has a jacket (40) encompassing the outer cylinder (43), wherein the jacket (40) is provided with connections (41, 46) for supplying and discharging the cooling liquid.

18. An installation according to claim 8,
**characterized in**
**that** the first and the second part (1 and 3) of the reactor are provided with heat insulating material.

## Revendications

1. Procédé de recyclage de déchets organiques domestiques et industriels, comprenant une première et une deuxième étape d'une pyrolyse, une séparation des produits de la pyrolyse en fractions et un recyclage de chaque fraction pour l'extraction de produits utiles, la deuxième étape de la pyrolyse étant effectuée avec une action électromagnétique simultanée sur les produits de la pyrolyse, **caractérisé en ce que** l'action électromagnétique est effectuée périodiquement à l'aide d'une décharge électrique avec une tension de claquage de 10 à 50 kV et avec une fréquence de décharge de 3 à 500 Hz.

2. Procédé selon la revendication 1
**caractérisé en ce que**
la pyrolyse primaire est effectuée à une température de 200 - 300°C et la pyrolyse secondaire est effectuée à une température de 400 - 1200°C.

3. Procédé selon la revendication 1
**caractérisé en ce que**
la séparation des produits de la pyrolyse en fractions a lieu à l'aide d'une séparation des hydrocarbures liquides de l'eau, une évacuation des produits gazeux, leur refroidissement et leur condensation et une évacuation des produits solides.

4. Procédé selon la revendication 1
**caractérisé en ce que**
les déchets organiques domestiques et industriels sont prétraités, le prétraitement incluant, par exemple, un broyage et un mélange.

5. Procédé selon la revendication 1
**caractérisé en ce que**
le recyclage des déchets est effectué en présence d'un catalyseur, le catalyseur étant choisi selon la composition des déchets, avec un rapport de 2 à 15% de la masse des déchets.

6. Procédé selon la revendication 5
**caractérisé en ce que**
le catalyseur utilisé est une solution de soude.

7. Procédé selon la revendication 1
**caractérisé en ce que**
la pyrolyse est effectuée à une surpression de 0,15 à 0,7 atmosphères.

8. Dispositif de recyclage de déchets organiques domestiques et industriels avec un réacteur pour pyrolyse, qui est constitué de deux parties (1, 3), et avec un système (5) pour la séparation produits de la pyrolyse sous forme de vapeur ou de gaz, le dispositif étant en outre complété par une source (4) d'action électromagnétique, qui est montée que la deuxième partie (3) du réacteur, la sortie de la deuxième partie (3) étant reliée avec le système (5) de séparation des produits sous forme de vapeur ou de gaz, **caractérisé en ce que** la source (4) de l'action électromagnétique est conçue comme un générateur (23) couplé à un groupe de dispositifs de décharge (24), de façon à ce que l'action électromagnétique ait lieu au moyen d'une décharge électrique avec une tension de claquage de 10 à 50 kV et avec une fréquence de décharge de 3 à 500 Hz.

9. Dispositif selon la revendication 8,
**caractérisé en ce que**
le réacteur de pyrolyse est immobile.

10. Dispositif selon la revendication 8,
**caractérisé en ce que**
il comprend en outre une unité (2) pour le traitement des matières premières, qui est conçue comme une extrudeuse qui est reliée à la première partie (1) du réacteur.

11. Dispositif selon la revendication 8,
**caractérisé en ce que**
il est muni d'une unité (6) pour l'évacuation du produits solide, qui est conçue sous la forme de coulisseaux étanches aux gaz.

12. Dispositif selon la revendication 8,
**caractérisé en ce que**
le système (5) pour la séparation des produits de la pyrolyse sous la forme de vapeur et de gaz est conçu comme un condensateur (7) dont l'entrée (9) constitue l'entrée du système (5) pour la séparation des produits de la pyrolyse sous la forme de vapeur et de gaz, du dispositif de combustion (8) et de l'unité pour la séparation des milieux liquides reliés au condensateur (7).

13. Dispositif selon la revendication 8,
**caractérisé en ce que**
la première partie (1) du réacteur est conçue comme un réservoir (11) avec un cylindre externe (12) étanche à l'air et un cylindre interne (19) étanche à l'air,
le cylindre interne (19) comprend une vis sans fin (14) à pas variable,
la vis sans fin (14) comprend un arbre creux (15) relié à un dispositif d'entraînement (16),
l'arbre creux (15) de la vis sans fin (14) comprend un manchon d'entrée et un manchon de sortie,
entre le cylindre interne et le cylindre externe (19 et 12), se trouve un guidage en spirale (21),
sur le cylindre externe (12), sont montés un groupe de raccords (20) pour l'introduction de gaz chauds et un raccord (13) pour l'évacuation des gaz chauds et le cylindre interne (19) est relié à un manchon de sortie (22).

14. Dispositif selon la revendication 8,
**caractérisé en ce que**
la deuxième partie (3) du réacteur de pyrolyse est conçu comme un cylindre externe (26) étanche à l'air et comme un cylindre interne (34) étanche à l'air,
le cylindre interne (34) comprend une vis sans fin (29) disposée sur un arbre (30), l'arbre (30) est relié à un dispositif d'entraînement (35) ;
entre le cylindre interne et le cylindre externe (34 et 26), se trouve un guidage en spirale (32), le cylindre externe (26) comprenant un groupe de raccords (33) pour l'introduction de gaz chauds et un raccord (28) pour l'évacuation des gaz chauds et le cylindre interne (34) comprend un raccord (25) avec une bride pour la liaison avec la première partie (1) du réacteur, un raccord (27) pour l'évacuation des produits sous forme de vapeur et de gaz et un raccord (31) pour la sortie des produits solides.

15. Dispositif selon la revendication 14,
**caractérisé en ce que**
la vis sans fin (29) de la deuxième partie (3) du réacteur est conçue comme une vis sans fin à rame.

16. Dispositif selon la revendication 14,
**caractérisé en ce que**
le groupe de dispositifs de décharge (24) est monté sur le raccord (25) pour la liaison de la première et de la deuxième partie (1 et 3) du réacteur.

17. Dispositif selon la revendication 14,
**caractérisé en ce que**
le condensateur (7) est conçu comme un cylindre interne (42) et un cylindre externe (43),
entre les cylindres (42, 43), se trouve une spirale (36) pour la circulation du mélange vapeurs-gaz et le cylindre interne (42) est muni de raccords (37) pour l'introduction et l'évacuation du liquide de refroidissement et d'un raccord (44) pour l'évacuation des produits liquides,
le cylindre externe (43) est muni de raccords (39 et 45) pour l'entrée et la sortie des produits sous forme de vapeurs et de gaz et
le cylindre externe (43) comprend une enveloppe externe (40) comprenant le cylindre externe (43), l'enveloppe externe (40) étant munie de raccords (41, 46) pour l'introduction et l'évacuation du liquide de refroidissement.

18. Dispositif selon la revendication 8,
**caractérisé en ce que**
la première et la deuxième partie (1 et 3) du réacteur sont munies d'un matériau thermiquement isolant.
